# EUROPÄISCHE PATENTSCHRIFT

(11) **EP 2 107 456 B1**
(45) Veröffentlichungstag und Bekanntmachung des Hinweises auf die Patenterteilung: **09.10.2019**
(21) Anmeldenummer: 09153406.5
(22) Anmeldetag: 23.02.2009
(51) Int. Cl.: G06F 9/451, G06F 3/0488

(54) **Auswahl von Anzeigenmodi "SKINS" für ein Infotainmentsystem**
Selection of SKINS display modes for an infotainment system
Sélection de modes d'affichage SKINS pour un système d'info-spectacle

(30) Priorität: 04.04.2008 DE 102008017986
(43) Veröffentlichungstag der Anmeldung: 07.10.2009
(73) Patentinhaber: Volkswagen Aktiengesellschaft, 38440 Wolfsburg (DE)
(72) Erfinder: Bachfischer, Katharina, 40476 Düsseldorf (DE); Peterwerth, Andre, 40476 Düsseldorf (DE)
(74) Vertreter: Gulde & Partner

(56) Entgegenhaltungen:
- DE-A1-102006 062 416
- US-A1- 2007 040 763
- GONZALEZ B: "Simplifying Home Theater" INTERNET ARTICLE, [Online] Juli 2007 (2007-07), Seiten 1-4, XP002533099 Gefunden im Internet: URL:http://www.hometheatermag.com/hookmeup /707hook/> [gefunden am 2009-06-18]

## Beschreibung

Die Erfindung betrifft ein Verfahren zum Betätigen und zur Auswahl einer Anzeige auf einer Anzeigevorrichtung einer interaktiven Bedienvorrichtung.

Die Bedienung von Anwendungen in einem Kraftfahrzeugcockpit erfolgt häufig über so genannte interaktive Bedienvorrichtungen. Eine interaktive Bedienvorrichtung umfasst unter anderem mindestens eine Anzeigevorrichtung, auf der ein oder mehrere Bedienelemente grafisch dargestellt werden.

Die einzelnen Anwendungen sind bestimmten Bedienelementen zugeordnet. Eine Bedienaktion auf einer Anzeigevorrichtung - einem Display oder Screen - führt zur Aktivierung beziehungsweise Auslösung einer gewünschten Funktion der Bedienvorrichtung.

Eine Bedienaktion erfolgt beispielsweise, indem ein Nutzer einen Körperteil, beispielsweise einen Finger der Hand, auf die grafische Darstellung des Bedienelements zubewegt. Von der Ausgestaltung einer Sensoreinheit der Bedienvorrichtung ist es abhängig, ob der Körperteil eine vor der Anzeigevorrichtung angeordnete oder in diese integrierte Sensoreinheit (zum Beispiel eine berührungsempfindliche Folie) berühren muss oder ob es ausreichend ist, sich nur auf einen gewissen Abstand an das jeweilige Bedienelement anzunähern, um die dem Bedienelement zugeordnete Bedienaktion zu aktivieren.

Interaktive Bedienvorrichtungen, bei denen eine Berührung notwendig ist, um die Bedienaktion auszulösen, werden als "Touch-Screen-Bedienvorrichtungen" bezeichnet.

Interaktive Bedienvorrichtungen, bei denen keine Berührung notwendig ist, um die Bedienaktion auszulösen, werden als "Berührungslose-Bedienvorrichtungen" bezeichnet.

Interaktive Bedienvorrichtungen, die berührungslos aktiviert werden können, umfassen beispielsweise Sensoren, die Hochfrequenzsignale detektieren können, die über den menschlichen Körper übertragen werden. Hierbei ist es erforderlich, dass ein Hochfrequenzsender nahe dem Körper oder in Berührung mit dem Körper angeordnet ist. In einem Kraftfahrzeug kann beispielsweise ein solcher Hochfrequenzsender in den Fahrzeugsitz integriert sein. Verfahren und Vorrichtungen zum Übertragen von Informationen mittels hochfrequenter Signale über einen menschlichen Körper sind beispielsweise in der Druckschrift WO 2004/078536 beschrieben. In der DE 10 2006 037 156 A1 wird außerdem eine solche interaktive Bedienvorrichtung mit einer Anzeigevorrichtung und ein Verfahren zum Betreiben der interaktiven Bedienvorrichtung für den Fall einer berührungslos bedienbaren Bedienvorrichtung beschrieben.

Eine Bedienung erfolgt im Stand der Technik zumeist per Touch oder berührungslos nach der DE 10 2006 037 156 A1 oder per Touch nach der DE 10 2006 062 416 A1 auf dafür vorgesehenen linearen, listenbasierten Oberflächen.

Diese linearen Bedienoberflächen ermöglichen es dem Nutzer, innerhalb von Menüs und Untermenüs zu blättern, um auf einen bestimmten Betriebszustand oder ein bestimmtes Leistungsmerkmal der Bedienvorrichtung zugreifen zu können.

In einem Fahrzeug, insbesondere in einem, in dem eine größere Anzahl elektronischer Geräte vorhanden ist, kann es schwierig sein, sich innerhalb der Menüs gezielt zu bewegen und den jeweils vom Nutzer gewünschten Betriebszustand oder das vom Nutzer gewünschte Leistungsmerkmal aufzufinden. Darüber hinaus muss sich der Nutzer mit der jeweiligen Anordnung der gewünschten Funktion oder des gesuchten Leistungsmerkmals innerhalb des Menüs beziehungsweise Untermenüs, in welchem sich diese beziehungsweise dieses jeweils befindet, vertraut machen. Folglich schränken konventionelle, listenbasierte oder matrixbasierte Bedienoberflächen wie sie aus den Druckschriften DE 10 2006 037 156 A1 und DE 10 2006 062 416 A1 entnehmbar sind, die angenehme Verwaltung der Funktionen und Leistungsmerkmale von elektronischen Geräten ein.

Die DE 10 2006 062 416 A1 bietet zur Überwindung des Nachteils eine Lösung an, indem auf einem Display eine Anzahl von Teilflächen (Facetten) gebildet werden, welche verschiedene Betriebsweisen zur Bedienung beziehungsweise Steuerung der Arbeit von mindestens einem Gerät oder einer Vielzahl der elektronischen Geräte repräsentieren.

Der Erfindung liegt ausgehend vom Stand der Technik die Aufgabe zugrunde ein Verfahren anzubieten, welches in der Lage ist, einen in verschiedene Bereiche gegliederten Screen (Anzeigevorrichtung) für andere Anwendungen zu nutzen.

Die Erfindung geht von einem Verfahren aus, welches zum Betätigen und zur Auswahl einer Anzeige auf einer Anzeigevorrichtung einer interaktiven Bedienvorrichtung in bestimmten Betriebsweise der interaktiven Bedienvorrichtung dient, wobei der jeweiligen Betriebsweise jeweils eine in Teilflächen untergliederte Anzeige auf der Anzeigevorrichtung zugeordnet ist.

Die Aufgabe der Erfindung wird dadurch gelöst, dass zur Steuerung einer interaktiven Bedienvorrichtung ein Verfahren eingesetzt wird, welches die Gesamtfläche der Anzeigevorrichtung jetzt in einer der jeweiligen Betriebsweise in mindestens zwei Teilflächen teilt und dem Benutzer in jeder der Teilfläche mindestens zwei verschiedenartige - "geskinnte" - Anzeigemodi aus- beziehungsweise vorgibt, wodurch der Benutzer nachfolgend, eine Auswahl trifft und durch interaktive Betätigung eines der vorgeschlagenen Anzeigemodi, für die nachfolgende, gewünschte charakteristische Anzeige, die auf der Gesamtfläche der Anzeigevorrichtung angezeigt beziehungsweise übertragen wird, entscheidet, in welcher der charakteristischen Anzeigen die jeweilige Betriebsweise dargestellt werden soll.

Als eine Betriebsweise, die auf der Anzeigevorrichtung in verschiedenartigen Anzeigemodi dargestellt werden kann, sind beispielsweise unterschiedliche Anwendungen eines Infotainment-Systems vorgesehen. Ein solches Infotainment-System, insbesondere in Kraftfahrzeugen, beinhaltet die Verknüpfung zwischen dem Vermitteln von Informationen und Unterhaltung über ein sogenanntes Multi-Media-Interface "MMI". Das MMI-System kann neben dem Radioprogramm, komplexe Aufgaben, wie zum Beispiel die aktuelle Verkehrssituation in Sekundenschnelle schriftlich anzeigen, sowie ebenfalls eine Kartendarstellung eines Navigationssystems als Anzeige liefern.

Die Bedienung des Telefons, die Auswahl eines bestimmten TV-Programms oder das Einstellen von Komfort-Funktionen des Fahrzeugs und eine der jeweiligen Betriebsweise zugehörige Darstellung auf der Anzeigevorrichtung runden die Anwendungsmöglichkeiten ab. Die jeweilige Betriebsweise entspricht somit jeweils einer Teilanwendung des komplexen MMI-Systems, wobei insbesondere die Darstellung von Straßenkarten eines Navigationssystems zur Erläuterung des Verfahrens besonders geeignet ist.

Als Anzeigemodi in verschiedenartigen "Skins" (engl. Haut, Verkleidung), auch Design oder Theme (engl. für Thema) genannt, wird ein Paket - also eine bestimmte Anzahl - von Bildern, Einstellungen und Darstellungen verstanden, durch die das Aussehen und das Verhalten von grafischen Benutzeroberflächen festlegbar ist.

In einer bevorzugten ersten Ausgestaltung der Erfindung werden die mindestens zwei verschiedenartigen Anzeigemodi mit ihren Teilflächen auf einer Gesamtfläche der Anzeigevorrichtung generiert, wobei die Anzeige der jeweiligen Betriebsweise in ihrer Gesamtheit in den verschiedenartigen Anzeigemodi in den jeweiligen Teilflächen sichtbar gemacht wird. Diese erste Ausgestaltung wird in dem nachfolgenden Ausführungsbeispiel noch näher erläutert.

In einer anderen bevorzugten zweiten Ausgestaltung werden die mindestens zwei verschiedenartigen Anzeigemodi ebenfalls mit ihren Teilflächen auf einer Gesamtfläche der Anzeigevorrichtung generiert, jedoch wird die Anzeige der jeweiligen Betriebsweise in ihrer Gesamtheit in dem jeweiligen Anzeigemodi jeweils auf einer der Teilflächen sichtbar gemacht.

Bevorzugt ist ferner, dass die mindestens zwei verschiedenen Anzeigemodi innerhalb der interaktiven Bedienvorrichtung separat abrufbar beziehungsweise aufrufbar sind oder automatisch bei jedem Wechsel von einer Betriebsweise zu anderen ausgegeben beziehungsweise angezeigt werden.

Bevorzugt ist zudem, dass die Anzahl n und/oder die Farbe und/oder der Kontrast und/oder die Form der mindestens zwei Teilflächen und/oder die Darstellungsart, der in den jeweiligen Teilflächen erzeugten Darstellungen und/oder Abbildungen und/oder Symbole der Anzeigevorrichtung bereits in einer Software, die zur Durchführung des Verfahren in einer Steuerung abgespeichert ist, unveränderbar abgelegt ist.

Bevorzugt ist auch eine andere Ausführung innerhalb der die Anzahl n und/oder die Farbe und/oder der Kontrast der Teilflächen und/oder die Form und/oder die Darstellungsart, der in den jeweiligen Teilflächen erzeugten Darstellungen und/oder Abbildungen und/oder Symbole der Anzeigevorrichtung vom Benutzer innerhalb eines Menüs der interaktiven Bedienvorrichtung mit Hilfe einer frei konfigurierbaren Software, die zur Durchführung des Verfahren in einer Steuerung abgespeichert ist, vorgegeben werden kann.

Die Bedienung der interaktiven Bedienvorrichtung wird bevorzugt per Berührung der Oberfläche der Anzeigevorrichtung oder berührungslos an der Anzeigevorrichtung oder auch konventionell über Auswahlelemente (zum Beispiel Schalter, Tasten, Maus, Trackball) einer Bedienvorrichtung vorgenommen.

Weitere bevorzugte Ausgestaltungen der Erfindung ergeben sich aus den übrigen, in den Unteransprüchen genannten Merkmalen.

Da das Verfahren anhand der Darstellung einer Straßenkarte eines Navigationssystems in der beispielhaften Betriebsweise "Navigation" gut verdeutlicht werden kann, erfolgt die Beschreibung mit Hilfe der Figuren nachfolgend in einem Ausführungsbeispiel, wobei die Figuren folgendes zeigen.

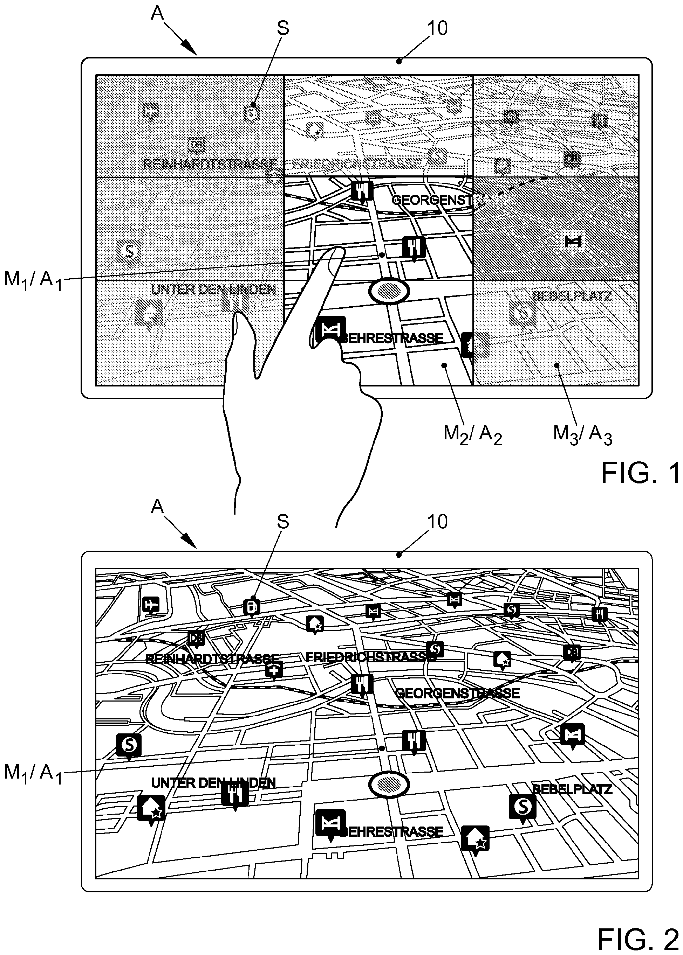

Figur 1 zeigt eine Anzeigevorrichtung 10 in der Betriebsweise Navigation mit Darstellung verschiedenartiger Anzeigemodi M_{n=1 bis 9} nach der ersten bevorzugten Ausführung vor einer Auswahl durch den Benutzer und Figur 2 zeigt die Anzeigevorrichtung 10 in der Betriebsweise Navigation im durch den Benutzer ausgewählten Anzeigemodus Mₙ₌₁.

Die Anzeigevorrichtung 10 weist eine Gesamtfläche A auf, welche im Ausführungsbeispiel beispielhaft aus neun Teilflächen Aₙ₌₁₋₉ gebildet ist. Zu jeder der Teilflächen Aₙ₌₁₋₉ gehört jeweils ein Anzeigemodus Mₙ₌₁₋₉, wobei der Übersichtlichkeit halber nur drei Teilflächen A₁, A₂ und A₃ mit den jeweils zugehörigen Anzeigemodi M₁, M₂ und M₃ mit Bezugszeichen versehen worden sind. Die Form der Teilflächen Aₙ₌₁₋₉ ist als Rasterbild mit gleichgroßen rechteckigen Rasterflächen ausgebildet.

Diese Anzeigemodi Mₙ₌₁₋₉ können sich hinsichtlich der Farbe und/oder dem Kontrast und/oder ihrer Form unterscheiden und somit unterschiedlich "geskinnt". In der Figur 1 sind insbesondere die unterschiedlichen Kontraste sichtbar. Die unterschiedlichen Farbgebungen sind in den schwarz/Weiß Abbildungen nicht sichtbar.

Darüber hinaus kann die Darstellungsart, der in den jeweiligen Teilflächen Aₙ₌₁₋₉ erzeugten Darstellungen und/oder Abbildungen und/oder Symbole S unterschiedlich ausgeführt sein.

Als Symbole sind beispielhaften sogenannte POIs (Points of Interest) dargestellt, die von Teilfläche zu Teilfläche Aₙ in verschiedenen Farben, Formen oder Kontrasten dargestellt also ebenfalls unterschiedlich "geskinnt" sein können.

In der hier dargestellten ersten Ausführung bilden die Teilflächen Aₙ₌₁₋₉ ein zusammenhängendes Bild - eine Straßenkarte in der Betriebsweise Navigation - innerhalb der Gesamtfläche A aus.

Es besteht jedoch auch die Möglichkeit, in einer zweiten Ausführung, die hier nicht näher dargestellt ist, in jeder der Teilflächen Aₙ₌₁₋₉ jeweils das Gesamtbild gemäß der in Figur 1 dargestellten Gesamtfläche A darzustellen. In einem solchen Fall ist das nach der Auswahl sichtbare Gesamtbild auf der Gesamtfläche A vor der Auswahl in den neun Teilflächen Aₙ₌₁₋₉ in neun verschiedenen Anzeigemodi Mn=1-9 sichtbar.

Bei jedem Wechsel von einer Betriebsweise zur anderen, beispielsweise innerhalb eines Infotainment-Systems vom Navigationssystem zur Radioanzeige, ist das Verfahren dahingehend ausführbar, dass bei jedem Wechsel automatisch auf der Anzeigevorrichtung 10 mehrere, mindestens zwei, Teilflächen Aₙ mit verschiedenen Anzeigemodi Mₙ angezeigt werden. Die Anzahl der Teilflächen Aₙ mit den jeweiligen Anzeigemodi Mₙ ist dabei in einer Variante vom Benutzer innerhalb des Menüs der interaktiven Bedienvorrichtung vorgebbar oder in einer anderen Variante unveränderlich im Steuergerät beziehungsweise der zugehörigen Software abgelegt.

Es besteht jedoch auch die Möglichkeit, diese Auswahl der zur Verfügung stehenden Anzeigemodi Mₙ zwischendurch ohne den Wechsel von einer Betriebsweise zur anderen oder innerhalb einer Betriebsweise anzuzeigen, wenn der Benutzer auf separatem Wege verschiedenartige Anzeigemodi Mₙ in den zugehörigen Teilflächen Aₙ in der vom Nutzer veränderbaren oder softwareseitig fest vorgegebenen Anzahl n abruft.

Grundsätzlich kann das Verfahren zudem vorsehen, dass die Anzahl n und/oder die Farbe und/oder der Kontrast und/oder die Form einer Teilfläche Aₙ und/oder die Darstellungsart der in den jeweiligen Teilflächen Aₙ erzeugten Darstellungen und/oder Abbildungen und/oder Symbole S der Anzeigevorrichtung 10 vom Benutzer innerhalb eines Menüs der interaktiven Bedienvorrichtung vorgegeben werden kann.

Das Verfahren kann auch vorsehen, dass die Anzahl n und/oder die Farbe und/oder der Kontrast und/oder die Form der Teilflächen Aₙ und/oder die Darstellungsart der in den jeweiligen Teilflächen Aₙ erzeugten Darstellungen und/oder Abbildungen und/oder Symbole S der Anzeigevorrichtung 10 nicht vom Benutzer geändert werden können, da hierfür bereits unveränderbar entsprechende Layouts vorgegeben sind.

Das Verfahren ermöglicht, dass der Benutzer unabhängig von listenbasierten oder matrixbasierten Menüs beim Aufrufen einer gewünschten Betriebsweise, hier beispielsweise die Straßenkarte des Navigationssystems, durch Touch-Bedienung oder berührungslose Bedienung eine der Teilflächen Aₙ, beispielsweise A₁ mit dem Anzeigemodus M₁, auswählt, sodass nach dieser Auswahl die jeweilige charakteristische - "geskinnte" - Anzeigenoberfläche auf die Gesamtfläche A der Anzeigevorrichtung 10 übertragen und angezeigt wird.

Der in der Figur 1 beispielhaft dargestellte Anzeigemodus M₁ mit seiner Farbe, seinem Kontrast, seiner Rasterform und der jeweils innerhalb der Teilfläche A₁ dargestellten Abbildungen und Symbole S, wird nach Auswahl der Teilfläche A₁, auf die gesamte Fläche A der Anzeigevorrichtung 10, wie in Figur 2 gezeigt, übertragen.

Es besteht selbstverständlich die Möglichkeit, anders als bei der Touch-Bedienung beziehungsweise der berührungslosen Bedienung, eine Bedienung per Joy-Stick oder eine Bedienung per Mause oder dergleichen vorzusehen.

Die in der Betriebsweise Navigation dargestellte Vorgehensweise als Teil eines Infotainment-Systems kann auch auf Betriebsweisen anderer Systeme übertragen werden.

### Bezugszeichenliste

- 10: Anzeigevorrichtung [Display, Screen, Monitor]
- A: Gesamtfläche der Anzeigevorrichtung
- Aₙ: n-te Teilfläche der Gesamtfläche A der Anzeigevorrichtung
- M: Anzeigemodus einer Betriebsweise
- Mₙ: n-ter Anzeigemodus M einer Betriebsweise
- S: Symbol (POI)

## Patentansprüche

1. Verfahren zur Auswahl und zum Betätigen einer Anzeige auf einer Anzeigevorrichtung (10) einer interaktiven Bedienvorrichtung in einem Kraftfahrzeug, wobei bestimmten Betriebsweisen der interaktiven Bedienvorrichtung, die innerhalb eines Infotainment-Systems des Kraftfahrzeuges vorgesehen sind, jeweils eine auf der Anzeigevorrichtung (10) in Teilflächen (Aₙ) untergliederte Anzeige zugeordnet ist,
**dadurch gekennzeichnet, dass**
• auf der Anzeigevorrichtung (10) mindestens zwei Teilflächen (Aₙ) mit mindestens zwei verschiedenen Anzeigemodi (Mₙ) innerhalb der jeweiligen Betriebsweise der interaktiven Bedienvorrichtung separat abrufbar sind, wobei
• die Gesamtfläche (A) der Anzeigevorrichtung (10) in der jeweiligen Betriebsweise in die mindestens zwei Teilflächen (Aₙ) geteilt wird und dem Benutzer in jeder der Teilflächen (Aₙ) die mindestens zwei verschiedenartigen Anzeigemodi (Mₙ) ausgegeben werden,
• die sich hinsichtlich der Farbe und/oder dem Kontrast und/oder ihrer Form und/oder in der Darstellungsart der erzeugten Darstellungen und/oder Abbildungen und/oder der Symbole (S) unterscheiden, und
• die mindestens zwei verschiedenartigen Anzeigemodi (Mₙ) mit ihren Teilflächen (Aₙ) auf einer Gesamtfläche (A) der Anzeigevorrichtung (10) generiert werden, wobei die Anzeige der jeweiligen Betriebsweise in ihrer Gesamtheit in den verschiedenartigen Anzeigemodi (Mₙ) ausgegeben wird, oder
• die mindestens zwei verschiedenartigen Anzeigemodi (Mₙ) mit ihren Teilflächen (Aₙ) auf einer Gesamtfläche (A) der Anzeigevorrichtung (10) generiert werden, wobei die Anzeige der jeweiligen Betriebsweise in ihrer Gesamtheit in dem jeweiligen Anzeigemodi (Mₙ) auf jeweils einer der Teilflächen (Aₙ) ausgegeben wird,
• wobei der Benutzer nach der Ausgabe durch interaktive Betätigung eines der vorgeschlagenen Anzeigemodi (Mₙ) eine Auswahl für die nachfolgende, gewünschte charakteristische Anzeige auf der Gesamtfläche (A) der Anzeigevorrichtung (10) trifft, wobei
• der ausgewählte Anzeigemodi (Mₙ) automatisch bei jedem Wechsel von einer Betriebsweise zur anderen ausgegeben wird.

2. Verfahren nach Anspruch 1,
**dadurch gekennzeichnet, dass**
eine Anzahl (n) und/oder die Farbe und/oder der Kontrast und/oder die Form eines Rasterbildes und/oder die Darstellungsart der in den jeweiligen Teilflächen (Aₙ) erzeugten Darstellungen und/oder Abbildungen und/oder Symbole (S) der Anzeigevorrichtung (10) vom Benutzer innerhalb eines Menüs der interaktiven Bedienvorrichtung vorgegeben werden.

3. Verfahren nach Anspruch 1,
**dadurch gekennzeichnet, dass**
die Bedienung der interaktiven Bedienvorrichtung per Berührung der Oberfläche der Anzeigevorrichtung (10) oder berührungslos an der Anzeigevorrichtung (10) oder konventionell über Auswahlelemente einer Bedienvorrichtung vorgenommen wird.

4. Verfahren nach Anspruch 1,
**dadurch gekennzeichnet, dass**
als Betriebsweise, die auf der Anzeigevorrichtung (10) in verschiedenartigen Anzeigemodi (Mₙ) dargestellt wird, unterschiedliche Anwendungen eines Infotainment-Systems vorgesehen sind.

5. Verfahren nach Anspruch 1 und 2,
**dadurch gekennzeichnet, dass**
die Anzahl der Teilflächen (Aₙ) mit den jeweiligen Anzeigemodi (Mₙ) innerhalb des Menüs der interaktiven Bedienvorrichtung vorgegeben werden oder unveränderlich in einem Steuergerät beziehungsweise der zugehörigen Software abgelegt sind.

6. Verfahren nach Anspruch 1 und 4,
**dadurch gekennzeichnet, dass**
die Auswahl der zur Verfügung stehenden Anzeigemodi (Mₙ) zwischendurch ohne den Wechsel von einer Betriebsweise zur anderen oder innerhalb einer bestimmten Betriebsweise angezeigt werden, wenn der Benutzer auf separatem Wege verschiedenartige Anzeigemodi (Mₙ) in den zugehörigen Teilflächen (Aₙ) der veränderbaren oder softwareseitig fest vorgegebenen Anzahl (n) abruft.

## Claims

1. A method for the selection and for the actuation of a display on a display device (10) of an interactive operator control apparatus in a motor vehicle, wherein in each case a display subdivided on the display device (10) into subareas (Aₙ) is assigned to specific operating modes of the interactive operator control apparatus, which are provided within an infotainment system of the motor vehicle,
**characterized in that**
• on the display device (10) at least two subareas (Aₙ) with at least two different display modes (Mₙ) within the respective operating mode of the interactive operator control apparatus can be called up separately, wherein
• the total surface area (A) of the display device (10) is divided in the respective operating mode into the at least two subareas (Aₙ) and the at least two different types of display modes (Mₙ) are output to the user in each of the subareas (Aₙ),
• which differ in respect to the color and/or the contrast and/or their shape and/or in the type of representation of the representations and/or figures and/or the symbols (S) generated, and
• the at least two different types of display modes (Mₙ) are generated with their subareas (Aₙ) on a total surface area (A) of the display device (10), wherein the display of the respective operating mode is output in its totality in the different types of display modes (Mₙ), or
• the at least two different types of display modes (Mₙ) are generated with their subareas (Aₙ) on a total surface area (A) of the display device (10), wherein the display of the respective operating mode is output in its totality in the respective display modes (Mₙ) on in each case one of the subareas (Aₙ),
• wherein the user after the output by interactive actuation of one of the proposed display modes (Mₙ) makes a selection for the subsequent, desired characteristic display on the total surface area (A) of the display device (10), wherein
• the selected display modes (Mₙ) are automatically output upon each change from one operating mode to another.

2. The method according to Claim 1,
**characterized in that**
a number (n) and/or the color and/or the contrast and/or the shape of a raster image and/or the type of representation of the representations and/or figures and/or symbols (S) of the display device (10) generated in the respective subareas (Aₙ) are predetermined by the user within a menu of the interactive operator control apparatus.

3. The method according to Claim 1,
**characterized in that**
the operation of the interactive operator control apparatus is carried out per contacting the surface of the display device (10) or in a contactless manner on the display device (10) or conventionally via selection means of an operator control apparatus.

4. The method according to Claim 1,
**characterized in that**
different applications of an infotainment system are provided as operating mode, which is represented on the display device (10) in different types of display modes (Mₙ).

5. The method according to Claim 1 or 2,
**characterized in that**
the number of subareas (Aₙ) with the respective display modes (Mₙ) are provided within the menu of the interactive operator control apparatus or are stored unchangeably in a control device or the associated software.

6. The method according to Claim 1 and 4,
**characterized in that**
the selections of the available display modes (Mₙ) are displayed now and then without the change from one operating mode to another or within a specific operating mode, if the user calls up different types of display modes (Mₙ) in the associated subareas (Aₙ) of the changeable or on the software side fixedly predetermined number (n) in a separate way.

## Revendications

1. Procédé pour la sélection et pour l'actionnement d'un affichage sur un dispositif d'affichage (10) d'un dispositif de commande interactif dans un véhicule automobile, moyennant quoi, à certains modes de fonctionnement du dispositif de commande, qui sont prévus à l'intérieur d'un système d'infotainment du véhicule automobile, correspond un affichage divisé, sur le dispositif d'affichage (10), en surfaces partielles (Aₙ),
**caractérisé en ce que**
• sur le dispositif d'affichage (10), au moins deux surfaces partielles (Aₙ), avec au moins deux modes d'affichage (Mₙ) différents, peuvent être appelées séparément à l'intérieur du mode de fonctionnement respectif du dispositif de commande interactif,
• la surface entière (A) du dispositif d'affichage (10) dans le mode de fonctionnement respectif étant divisé dans les au moins deux surfaces partielles (Aₙ) et, dans chacune des surfaces partielles (Aₙ), les au moins deux modes d'affichage (Mₙ) différents sont affichés à l'attention de l'utilisateur,
• qui se distinguent, en ce qui concerne la couleur et/ou le contraste et/ou leur forme et/ou le type de représentation, des représentations et/ou des images et/ou des symboles (S) générés et
• les au moins deux modes d'affichage (Mₙ) différents étant générés, avec leurs surfaces partielles (Aₙ), sur une surface entière (A) du dispositif d'affichage (10), l'affichage du mode de fonctionnement respectif étant généré dans son intégralité dans les différents modes d'affichage (Mₙ) ou
• les au moins deux modes d'affichage (Mₙ) différents étant générés, avec leurs surfaces partielles (Aₙ), sur une surface entière (A) du dispositif d'affichage (10), l'affichage du mode de fonctionnement respectif étant généré dans son intégralité dans le mode d'affichage (Mₙ) respectif sur une des surfaces partielles (Aₙ),
• l'utilisateur effectuant, après la sortie, par un actionnement interactif d'un des modes d'affichage (Mₙ) proposés, une sélection pour l'affichage caractéristique suivant souhaité sur la surface entière (A) du dispositif d'affichage (10),
• le mode d'affichage (Mₙ) sélectionné étant généré automatiquement lors de chaque passage d'un mode de fonctionnement à l'autre.

2. Procédé selon la revendication 1,
**caractérisé en ce que**
un nombre (n) et/ou la couleur et/ou le contraste et/ou la forme d'une image de trame et/ou le type de représentation des représentations générées dans les surfaces partielles (Aₙ) respectives et/ou les images et/ou les symboles (S) du dispositif d'affichage (10) sont prédéterminés par l'utilisateur à l'intérieur du menu du dispositif de commande interactif.

3. Procédé selon la revendication 1,
**caractérisé en ce que**
l'utilisation du dispositif de commande interactif s'effectue par un contact avec la surface du dispositif d'affichage (10) ou sans contact avec le dispositif d'affichage (10) ou de manière conventionnelle par l'intermédiaire d'éléments de sélection d'un dispositif de commande.

4. Procédé selon la revendication 1,
**caractérisé en ce que**
en tant que mode de fonctionnement, qui est représenté sur le dispositif d'affichage (10) dans différentes modes d'affichage (Mₙ), différentes utilisations d'un système d'infotainment sont prévues.

5. Procédé selon la revendication 1 et 2,
**caractérisé en ce que**
le nombre de surfaces partielles (Aₙ) avec les modes d'affichage (Mₙ) respectifs est prédéterminé à l'intérieur du menu du dispositif de commande interactif ou est enregistré de manière invariable dans un appareil de commande ou dans le logiciel correspondant.

6. Procédé selon la revendication 1 et 4,
**caractérisé en ce que**
la sélection des modes d'affichage (Mₙ) disponibles est affichée de temps en temps sans le passage d'un mode de fonctionnement à l'autre ou à l'intérieur d'un mode de fonctionnement déterminé, lorsque l'utilisateur appelle, de manière séparée, différents modes d'affichage (Mₙ) dans les surfaces partielles (Aₙ) respectives du nombre (n) variable ou prédéterminé dans le logiciel.
